# FASCICULE DE BREVET EUROPEEN

(11) **EP 0 791 289 B1**
(45) Date de publication et mention de la délivrance du brevet: **16.08.2001**
(21) Numéro de dépôt: 97400249.5
(22) Date de dépôt: 05.02.1997
(51) Int. Cl.: A01F 29/00

(54) **Dispositif pour distribuer des balles de végétaux**
Gerät zum Verteilen von Futterballen
Apparatus for dispensing large bales

(30) Priorité: 21.02.1996 FR 9602118
(43) Date de publication de la demande: 27.08.1997
(73) Titulaire: A & D, 75008 Paris (FR)
(72) Inventeur: Deboffles, Régis Pierre Arthur, 02300 Chauny (FR); Deboffles, René Arthur, 02300 Caillouel (FR)
(74) Mandataire: Bonnetat, Christian

(56) Documents cités:
- EP-A- 0 371 681
- FR-A- 2 500 718
- FR-A- 2 586 525

## Description

La présente invention concerne un dispositif pour distribuer la matière constituant les balles ou ballots de végétaux.

On sait que les balles de végétaux (comme la paille, le foin, ...), après avoir été formées puis stockées dans des endroits spécifiques, sont ensuite utilisées pour l'alimentation du bétail, notamment durant les périodes hivernales. Pour cela, les balles sont amenées jusqu'aux sites où se trouve le bétail, puis distribuées sur place par dispersion de la matière les constituant.

En raison du volume et de la masse de ces balles, on a souvent recours à des dispositifs mécaniques. Par exemple, on connaît un dispositif qui comprend, d'une part, un support de balle apte à être associé à un tracteur ou analogue, et pouvant pivoter dans un plan sensiblement vertical entre une position abaissée de chargement de la balle et une position levée de distribution et, d'autre part, des disques de coupe rotatifs liés au support et aptes à couper et distribuer les végétaux de la balle en les dispersant ainsi sur une surface importante du site (prairie, ...).

Si ce type de dispositif donne des résultats satisfaisants, il présente cependant des inconvénients.

En effet, dans ce dispositif, la balle de végétaux est maintenue en place par l'action de deux bras latéraux du support qui s'appliquent respectivement contre les faces transversales d'extrémité de la balle, de sorte que la balle est disposée transversalement au support et attaquée latéralement par les disques. Il en résulte qu'un tel montage ne garantit pas un maintien efficace et fiable de la balle, notamment lorsque son diamètre diminue au fur et à mesure de la coupe puisque les disques attaquent la surface latérale. De plus, l'usage de ce dispositif est limité à la distribution de balles cylindriques du fait de la disposition axiale (longitudinale) de la balle entre les bras du support, ce qui, dans le cas de balles parallélépipédiques dont la dimension en longueur est beaucoup plus importante, entraînerait un maintien précaire.

En outre, un mécanisme approprié doit être prévu pour assurer le déplacement relatif entre le support et les disques pendant la coupe de la balle.

Par ailleurs, par le document FR-A-2 586 525, on connaît déjà un dispositif pour distribuer une balle de végétaux, comportant :
- un support de balle, susceptible d'être associé à un engin motorisé et de pivoter dans un plan vertical entre une position abaissée de chargement de la balle et une position levée de distribution ; et
- des moyens de coupe rotatifs associés audit support et aptes à couper et distribuer les végétaux constituant la balle,
ledit support se présentant sous la forme d'une cage allongée ouverte à l'avant dans laquelle peut être reçue longitudinalement ladite balle, et lesdits moyens de coupe étant situés à l'arrière de ladite cage de façon que, lorsque celle-ci est en position levée, ladite balle glisse, sous son propre poids, sur ladite cage en direction de l'arrière, pour venir reposer au moins en partie sur lesdits moyens de coupe par sa face transversale correspondante.

Ainsi, grâce à la cage formant support, la balle de végétaux est convenablement maintenue en place sur toute sa longueur par sa paroi latérale qui s'applique contre la cage. De la sorte, on peut engager dans la cage des balles de végétaux aussi bien rondes que parallélépipédiques. Du fait du guidage longitudinal de la balle de végétaux dans la cage, les moyens de coupe, constitués dans le document précité par un unique disque de coupe rotatif central, attaquent la face transversale en regard de la balle, et non pas sa paroi latérale comme dans le dispositif antérieur. Et, de plus, il n'est plus nécessaire de prévoir un mécanisme pour déplacer relativement le disque et le support, puisque la balle de végétaux glisse par gravité en direction du disque, lorsque le support est en position levée, ce qui permet en outre de distribuer les végétaux de la balle.

La présente invention a notamment pour but de perfectionner un dispositif du type rappelé ci-dessus.

A cette fin, selon l'invention, le dispositif pour distribuer une balle de végétaux, tel que décrit ci-dessus, est remarquable en ce que lesdits moyens de coupe rotatifs sont constitués de deux disques de coupe espacés l'un de l'autre et prévus latéralement à l'arrière de ladite cage, les plans desdits disques de coupe étant légèrement convergents l'un vers l'autre, vers l'extérieur de l'arrière de ladite cage.

Ainsi, la face transversale de la balle, en regard desdits disques, a toujours tendance à se diriger et à s'engager dans les disques convergents.

Avantageusement, lesdits disques de coupe sont associés, de façon réglable en orientation, à une barre de liaison elle-même articulée, autour d'un axe orthogonal à la direction longitudinale de la cage, à l'arrière de cette dernière. On peut alors régler au mieux, selon la dimension de la balle, l'orientation des disques (convergence) et la position angulaire de ceux-ci par rapport à l'extrémité arrière de la cage.

En outre, les faces d'attaque des disques, contre lesquelles s'applique la face transversale correspondante de la balle de végétaux, comprennent dans la partie centrale des disques, des couteaux coupants disposés sensiblement radialement et à des distances différentes du centre desdits disques et, au voisinage de la périphérie des disques, des couteaux d'éjection des végétaux coupés vers l'extérieur. Grâce à cet agencement des couteaux, la matière végétale de la balle est régulièrement et progressivement coupée, puis éjectée latéralement vers l'extérieur, au loin.

De plus, un râtelier de retenue de la matière végétale des balles peut être prévu à l'arrière de ladite cage, au-dessus desdits disques.

Par exemple, ladite cage allongée est réalisée à partir d'un assemblage d'éléments tubulaires et/ou profilés, ce qui lui confère une tenue mécanique satisfaisante. De plus, son coût de production est minime.

Dans une forme préférée de réalisation, ladite cage allongée présente une section transversale sensiblement en U, dont la base supporte ladite balle de végétaux tandis que les flancs latéraux assurent son maintien. Ainsi, des balles parallélépipédiques ou rondes peuvent y être logées en étant maintenues latéralement par les flancs de la cage.

En particulier, la base de ladite cage peut être définie par une pluralité d'éléments plats parallèles, s'étendant longitudinalement et revêtus d'une matière anti-adhérente. L'introduction de la balle de végétaux dans la cage, en position abaissée, est ainsi facilitée, et également son coulissement en direction des disques de coupe en position levée de ladite cage. De plus, lesdits éléments plats peuvent présenter longitudinalement une forme de glissière (ou de toboggan) et sont fixés à l'avant ouvert de ladite cage par l'une de leurs extrémités, tandis que leurs autres extrémités, situées à proximité de l'arrière de ladite cage, sont libres. Cette élasticité de la base permet à la balle, initialement pliée, de se desserrer spontanément.

Dans une autre forme de réalisation, ladite cage allongée pourrait présenter une section transversale sensiblement semi-circulaire, ce qui conviendrait particulièrement aux balles cylindriques dont la paroi latérale épouserait la forme de la cage.

Les figures du dessin annexé feront bien comprendre comment l'invention peut être réalisée. Sur ces figures, des références identiques désignent des éléments semblables.

La figure 1 est une vue en perspective d'un exemple de réalisation du dispositif selon l'invention, en position abaissée pour le chargement d'une balle de végétaux.

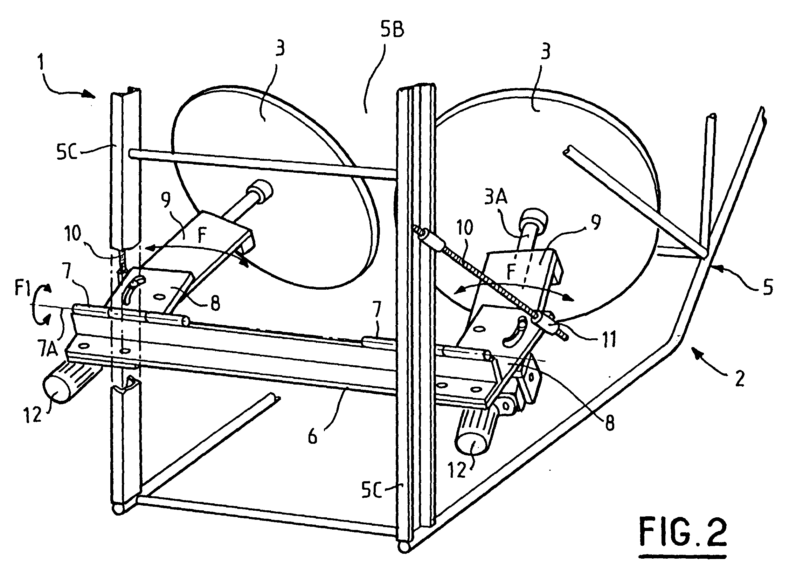

La figure 2 est une vue en perspective schématique de l'arrière du dispositif, montrant le montage des disques de coupe sur la cage.

Les figures 3 et 4 sont respectivement une vue en plan et une vue en coupe médiane d'un des disques de coupe.

La figure 5 est une vue en perspective du dispositif en position levée pour distribuer et disperser les végétaux constituant la balle.

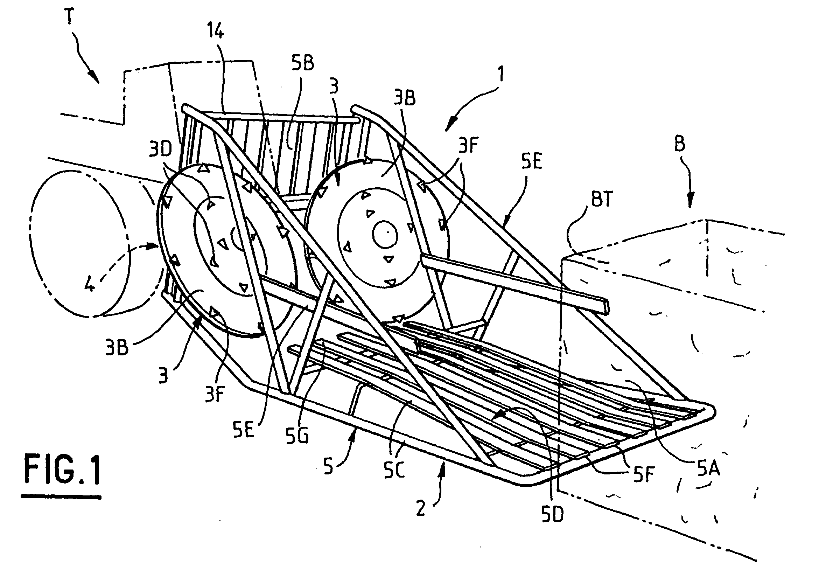

Le dispositif 1 montré sur la figure 1 a pour but de distribuer la matière végétale (paille, foin, ...) constituant une balle ou un ballot, par coupe puis dispersion de celle-ci au-dessus d'une surface telle qu'une zone d'une prairie ou d'un champ pour l'alimentation du bétail.

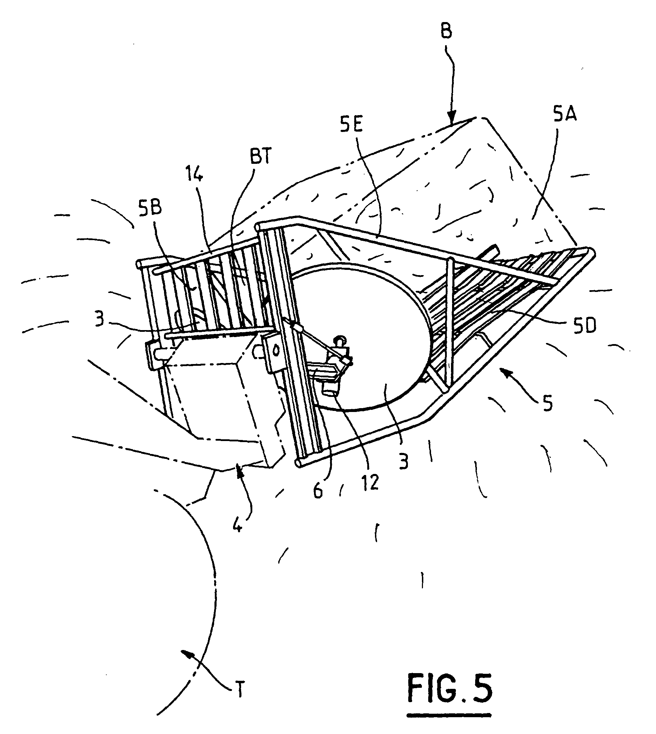

A cet effet, le dispositif 1 comporte un support 2 pour la réception d'une balle B et, dans cet exemple, deux disques rotatifs 3 pour la coupe et la dispersion de la matière végétale. Le support 2 est généralement associé, de façon connue, à un montage "trois points" 4 à mécanisme de levage situé, dans ce cas, à l'arrière d'un tracteur T et permettant de faire pivoter, dans un plan approximativement vertical, le support 2 entre une position abaissée de chargement de la balle (figure 1) et une position levée de distribution de la matière végétale (figure 5).

Selon l'invention, le support 2 présente une forme de cage 5 allongée, ouverte à ses extrémités, respectivement avant 5A, par laquelle est alors introduite la balle, et arrière 5B, sur laquelle sont situés les disques rotatifs 3. Ainsi, les balles sont disposées longitudinalement (balles parallélépipédiques) ou axialement (balles cylindriques) dans la cage allongée, en y étant convenablement maintenues.

Comme le montre la figure 1, la cage 5 est obtenue à partir d'un assemblage d'éléments tubulaires, profilés, ou analogues 5C, fixés entre eux par soudage et/ou par vissage et, dans cet exemple de réalisation, sa section transversale définit un U évolutif. De la base ou fond 5D de la cage, se dressent perpendiculairement les deux flancs latéraux 5E parallèles entre eux et qui augmentent dimensionnellement en direction de l'extrémité arrière 5B. Dans cette réalisation, les flancs latéraux sont approximativement triangulaires.

La cage 5 est alors particulièrement adaptée pour manipuler des balles parallélépipédiques B, sa base 5D supportant l'une des faces latérales de la balle, tandis que les flancs 5E maintiennent en place latéralement la balle par deux autres faces latérales de celle-ci. Des balles cylindriques pourraient néanmoins être montées dans la cage en y étant convenablement maintenues. Bien évidemment, les flancs latéraux de la cage pourraient avoir une autre forme (polygonale ou différente). De même, la section transversale de la cage pourrait être différente d'un U, telle que par exemple demi-circulaire, notamment pour la réception de balles cylindriques, sans sortir du cadre de l'invention.

La base 5D de la cage allongée est constituée d'éléments plats 5C ayant une forme générale de glissière (toboggan). L'une des extrémités 5F des éléments plats 5C de la base est soudée à un élément transversal de l'extrémité avant 5A de la cage, tandis que les extrémités opposées 5G des éléments plats sont libres. La base 5D est ainsi élastiquement souple, ce qui permet à la balle de végétaux initialement "pliée", lorsqu'elle est chargée dessus, de se desserrer naturellement. Par ailleurs, pour faciliter le coulissement de la balle de végétaux, les éléments plats 5C de la base sont revêtus d'une matière anti-adhérente telle qu'un polytétrafluoroéthylène.

Deux disques rotatifs 3 sont prévus à l'extrémité arrière 5B de la cage allongée. Ils présentent une structure identique et sont approximativement disposés côte à côte, espacés l'un de l'autre, en faisant sensiblement face à l'extrémité arrière 5B de la cage. Toutefois, les plans desdits disques convergent légèrement l'un vers l'autre, en direction de l'extérieur de la cage pour faciliter la coupe de la matière végétale. Les disques sont symétriquement disposés par rapport au plan longitudinal médian de la cage allongée.

Le montage des disques sur la cage s'effectue par une barre de liaison intermédiaire 6 reliant transversalement deux éléments profilés 5C de la cage situés parallèlement et verticalement à son extrémité arrière 5B. Cette barre est articulée, via des charnières 7 à axe d'articulation 7A orthogonal à la cage allongée 5, sur les éléments 5C et, à ses extrémités, sont rapportées par vissage des plaques 8 sous lesquelles sont agencés des supports 9 pour les disques rotatifs 3. Plus particulièrement, chaque support peut être orienté par rapport à sa plaque 8, parallèlement à celle-ci, ce qui permet, d'une part, d'assurer le réglage de la convergence des disques 3 l'un par rapport à l'autre et, d'autre part, d'effacer les disques 3 et les supports 9 vers l'intérieur de la cage 5 pour le transport du dispositif 1 sur route.

Par ailleurs, les disques 3 peuvent être réglés en inclinaison par rapport à l'extrémité arrière 5B de la cage. En effet, des tiges filetées 10 sont disposées respectivement entre les éléments profilés 5C de l'extrémité arrière 5B et les plaques 8, si bien qu'en manoeuvrant ces tiges 10 par rapport à des écrous 11 rapportés sur les plaques, les supports 9 des disques peuvent pivoter autour de l'axe d'articulation 7A des charnières 7. Ainsi, les disques peuvent être déplacés en orientation selon les flèches F et en pivotement selon les flèches F1, pour être réglés au mieux notamment en fonction de la dimension des balles à traiter.

En outre, l'entraînement en rotation de chaque disque 3 est obtenu par un moteur 14, par exemple hydraulique, qui est fixé à la plaque correspondante 8 et dont l'arbre d'entraînement, non représenté sur les figures, est couplé à l'arbre de rotation 3A du disque en question.

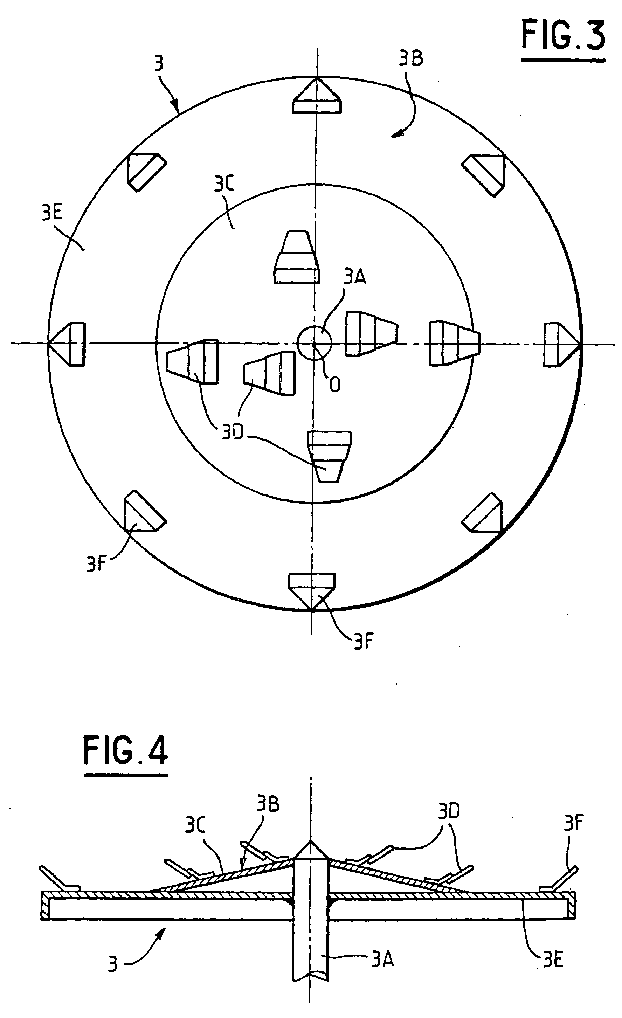

Par ailleurs, les disques 3 tournent en sens inverse l'un par rapport à l'autre et l'un d'eux est représenté sur les figures 3 et 4. On voit que la face active 3B du disque, qui est en regard de la cage et contre laquelle va s'appliquer la face transversale correspondante de la balle B, comporte au voisinage de sa partie centrale 3C, des couteaux 3D destinés à la coupe de la matière végétale et, au voisinage de sa périphérie 3E, des couteaux 3F destinés à l'éjection de la matière végétale coupée. Ces couteaux sont rapportés par soudure ou autre sur chaque disque et font ainsi saillie par rapport à sa face active 3B.

On remarque sur la figure 3 que la disposition des couteaux de coupe sur la partie centrale 3C est progressive, c'est-à-dire que chaque couteau par rapport au centre 0 du disque 3 est à une distance différente. De la sorte, cela permet d'attaquer progressivement et efficacement une zone importante de la balle. En revanche, les couteaux de dispersion qui reçoivent ensuite, du fait de la rotation du disque, la matière végétale coupée, se chargent de l'éjection hors du dispositif et sur des distances, selon la vitesse de rotation des disques et de l'inclinaison du dispositif par rapport au sol, de plusieurs mètres (6 à 8 mètres), ce qui permet de couvrir une surface importante au sol évitant une intervention manuelle ultérieure pour répartir la matière.

Par ailleurs, un râtelier 14 est prévu à l'arrière de la cage allongée, au-dessus des disques, pour retenir la matière végétale.

Le fonctionnement du dispositif de distribution 1 est le suivant.

Par le mécanisme de levage du montage "trois points" 4, le dispositif 1 occupe la position abaissée, montrée sur la figure 1 et pour laquelle la base 5D de la cage allongée repose sur le sol.

La balle B est alors introduite longitudinalement dans la cage allongée 5 par son extrémité avant 5A, ce qui est facilité par le revêtement glissant des éléments plats 5C de la base. Les flancs latéraux 5E guident la balle pendant son chargement et la maintiennent latéralement. Puis le dispositif 1 est amené en position levée, via le mécanisme de levage du montage "trois points", comme le montre la figure 5. L'orientation des disques a été préalablement réglée et également l'angle d'inclinaison du dispositif 1 par rapport au sol pour optimiser la coupe des balles de végétaux d'une dimension donnée.

Par suite du levage, la balle glisse sous son propre poids vers l'arrière de la cage et sa face transversale BT parvient jusqu'à l'extrémité arrière 5B de la cage pour reposer sur les faces d'attaque 3B des disques rotatifs 3 en fonctionnement. La rotation de ces derniers, via les moteurs 12, entraîne la coupe de la matière végétale par les couteaux 3D, puis l'éjection de la matière coupée par les couteaux 3F vers l'extérieur des disques de part et d'autre du dispositif grâce à la rotation inverse des disques, laquelle matière se répartit sur une surface importante du sol. Au fur et à mesure de la coupe, la balle B continue de glisser sous son propre poids vers les disques de coupe, grâce à sa position longitudinale dans la cage allongée, ce qui est rendu encore plus aisé par le revêtement glissant des éléments plats 5C de la base.

Ainsi, la balle peut être coupée puis distribuée en totalité par le dispositif de l'invention.

## Revendications

1. Dispositif pour distribuer une balle de végétaux, comportant :
- un support (2) de balle, susceptible d'être associé à un engin motorisé et de pivoter dans un plan vertical entre une position abaissée de chargement de la balle et une position levée de distribution ; et
- des moyens de coupe rotatifs associés audit support et aptes à couper et distribuer les végétaux constituant la balle,
ledit support (2) se présentant sous la forme d'une cage allongée (5) ouverte à l'avant dans laquelle peut être reçue longitudinalement ladite balle, et lesdits moyens de coupe étant situés à l'arrière de ladite cage de façon que, lorsque celle-ci est en position levée, ladite balle glisse, sous son propre poids, sur ladite cage en direction de l'arrière, pour venir reposer au moins en partie sur lesdits moyens de coupe par sa face transversale correspondante,
caractérisé en ce que lesdits moyens de coupe rotatifs sont constitués de deux disques de coupe (3) espacés l'un de l'autre et prévus latéralement à l'arrière (5B) de ladite cage, les plans desdits disques de coupe étant légèrement convergents l'un vers l'autre, vers l'extérieur de l'arrière de ladite cage (5).

2. Dispositif selon la revendication 1,
caractérisé en ce que lesdits disques de coupe (3) sont associés, de façon réglable en orientation, à une barre de liaison (6) elle-même articulée, autour d'un axe (7A) orthogonal à la direction longitudinale de la cage (5), à l'arrière (5B) de cette dernière.

3. Dispositif selon l'une des revendications 1 ou 2,
caractérisé en ce que les faces d'attaque (3B) des disques, contre lesquelles s'applique la face transversale correspondante de la balle de végétaux, comprennent dans la partie centrale (3C) des disques, des couteaux coupants (3D) disposés sensiblement radialement à des distances différentes du centre desdits disques et, au voisinage de la périphérie (3E) des disques, des couteaux d'éjection (3F) des végétaux coupés vers l'extérieur.

4. Dispositif selon l'une des revendications 1 à 3,
caractérisé en ce qu'un râtelier (14) de retenue de la matière végétale des balles est prévu à l'arrière de ladite cage, au-dessus desdits disques.

5. Dispositif selon l'une des revendications 1 à 4,
caractérisé en ce que ladite cage allongée (5) est réalisée à partir d'un assemblage d'éléments tubulaires et/ou profilés (5C).

6. Dispositif selon l'une des revendications 1 à 5,
caractérisé en ce que ladite cage allongée (5) présente une section transversale sensiblement en U, dont la base (5D) supporte ladite balle de végétaux tandis que les flancs latéraux (5E) assurent son maintien.

7. Dispositif selon la revendication 6,
caractérisé en ce que la base (5D) de ladite cage est définie par une pluralité d'éléments plats parallèles (5C), s'étendant longitudinalement et revêtus d'une matière anti-adhérente.

8. Dispositif selon la revendication 7,
caractérisé en ce que lesdits éléments plats (5C) présentent longitudinalement une forme de glissière et sont fixés à l'avant ouvert (5A) de ladite cage par l'une de leurs extrémités; tandis que leurs autres extrémités, situées à proximité de l'arrière (5B) de ladite cage, sont libres.

9. Dispositif selon l'une des revendications 1 à 5,
caractérisé en ce que ladite cage allongée (5) présente une section transversale sensiblement semi-circulaire.

## Claims

1. Device for dispensing a bale of plant matter, comprising:
- a bale support (2) which can be associated with a motorized vehicle and can pivot in a vertical plane between a lowered position for loading the bale and a raised dispensing position; and
- rotary cutting means associated with the said support and capable of cutting and dispensing the plant matter of which the bale is formed,
the said support (2) being in the form of an elongate cage (5) open at the front and in which the said bale can be housed longitudinally, and the said cutting means being located at the rear of the said cage so that, when the cage is in the raised position, the said bale slides under its own weight along the said cage towards the rear to rest at least partially on the said cutting means via its corresponding transverse face,
characterized in that the said rotary cutting means consist of two cutting discs (3) spaced apart and provided laterally at the rear (5B) of the said cage, the planes of the said cutting discs converging slightly towards each other towards the outside of the rear of the said cage (5).

2. Device according to Claim 1, characterized in that the said cutting discs (3) are associated, such that their orientation can be adjusted, with a connecting bar (6) which is itself articulated, about an axis (7A) orthogonal to the longitudinal direction of the cage (5), to the rear (5B) thereof.

3. Device according to either of Claims 1 and 2, characterized in that the attacking faces (3B) of the discs, against which the corresponding transverse face of the bale of plant matter rests, comprise, in the central part (3C) of the discs, cutting cutters (3D) arranged essentially radially at different distances from the centre of the said discs and, near the periphery (3E) of the discs, ejecting cutters (3F) for ejecting the cut plant matter to the outside.

4. Device according to one of Claims 1 to 3, characterized in that a rack (14) for retaining the plant matter of the bales is provided at the rear of the said cage above the said discs.

5. Device according to one of Claims 1 to 4, characterized in that the said elongate cage (5) is made from an assembly of tubular and/or profiled elements (5C).

6. Device according to one of Claims 1 to 5, characterized in that the said elongate cage (5) has a roughly U-shaped cross section, the base (5D) of which U-shape supports the said bale of plant matter while the lateral flanks (5E) hold it.

7. Device according to Claim 6, characterized in that the base (5D) of the said cage is defined by a number of parallel flat elements (5C) running longitudinally and coated with a non-stick material.

8. Device according to Claim 7, characterized in that longitudinally the said flat elements (5C) have the shape of a slideway and are fixed at the open front (5A) of the said cage by one of their ends while their other ends located near the rear (5B) of the said cage are free.

9. Device according to one of Claims 1 to 5, characterized in that the said elongate cage (5) has a roughly semicircular cross section.

## Patentansprüche

1. Vorrichtung zum Verteilen eines Futterballens, welche umfasst
- eine Auflage (2) für den Ballen, die geeignet ist, mit einem motorisierten Gerät verbunden zu werden und in einer vertikalen Ebene zwischen einer herabgelassenen Ladeposition für den Ballen und einer angehobenen Verteilungsposition zu schwenken; und
- rotierende Schneidmittel, die mit der Auflage verbunden und fähig sind, die den Ballen bildenden Pflanzen zu schneiden und zu verteilen,
wobei sich die Auflage (2) in Form eines vorn offenen länglichen Käfigs (5) zeigt, in welchem der Ballen in Längsrichtung aufgenommen werden kann, und wobei sich die Schneidmittel im hinteren Teil des Käfigs befinden, so dass, wenn sich dieser in angehobener Position befindet, der Ballen unter seinem Eigengewicht auf dem Käfig nach hinten gleitet, um sich wenigstens teilweise mit seiner entsprechenden quer verlaufenden Fläche an den Schneidmitteln aufzustützen,
dadurch gekennzeichnet, dass die rotierenden Schneidmittel aus zwei Scheidscheiben (3) bestehen, die in einem Abstand voneinander angeordnet und seitlich am hinteren Teil (5B) des Käfigs vorgesehen sind, wobei die Ebenen der Schneidscheiben zur Außenseite des hinteren Teils des Käfigs (5) hin leicht zueinander konvergent sind.

2. Vorrichtung nach Anspruch 1,
dadurch gekennzeichnet, dass die Schneidscheiben (3) in der Orientierung einstellbar mit einer Verbindungsstange (6) verbunden sind, die wiederum um eine zur Längsrichtung des Käfigs (5) orthogonalen Achse (7A) herum mit dem hinteren Teil (5B) dieses letzteren gelenkig verbunden ist.

3. Vorrichtung nach einem der Ansprüche 1 oder 2,
dadurch gekennzeichnet, dass die Angriffsflächen (3B) der Scheiben, an welche sich die entsprechende quer verlaufende Fläche des Futterballens anlegt, im mittleren Teil (3C) der Scheiben Schneidmesser (3D), die im wesentlichen radial mit verschiedenen Abständen zur Mitte der Scheiben angeordnet sind, und in der Nähe des Umfangs (3E) der Scheiben Messer (3F) zum Auswurf der geschnittenen Pflanzen nach außen umfassen.

4. Vorrichtung nach einem der Ansprüche 1 bis 3,
dadurch gekennzeichnet, dass am hinteren Teil des Käfigs über den Scheiben ein Gestell (14) zum Zurückhalten des Pflanzenmaterials der Ballen vorgesehen ist.

5. Vorrichtung nach einem der Ansprüche 1 bis 4,
dadurch gekennzeichnet, dass der längliche Käfig (5) ausgehend von einem Aufbau aus röhrenförmigen und/oder Profilelementen (5C) ausgeführt ist.

6. Vorrichtung nach einem der Ansprüche 1 bis 5,
dadurch gekennzeichnet, dass der längliche Käfig (5) einen im wesentlichen U-förmigen Querschnitt aufweist, dessen Basis (5D) den Pflanzenballen trägt, während die seitlichen Flanken (5E) sein Halten sicherstellen.

7. Vorrichtung nach Anspruch 6,
dadurch gekennzeichnet, dass die Basis (5D) des Käfigs durch eine Vielzahl von parallelen flachen Elementen (5C) definiert ist, die sich in Längsrichtung erstrecken und mit einem Antihaftmaterial beschichtet sind.

8. Vorrichtung nach Anspruch 7,
dadurch gekennzeichnet, dass die flachen Elemente (5C) in Längsrichtung eine Rutschenform aufweisen und mit einem ihrer Enden am offenen vorderen Teil (5A) des Käfigs befestigt sind, während ihre anderen Enden, die sich in der Nähe des hinteren Teils (5B) des Käfigs befinden, frei sind.

9. Vorrichtung nach einem der Ansprüche 1 bis 5,
dadurch gekennzeichnet, dass der längliche Käfig (5) einen im wesentlichen halbkreisförmigen Querschnitt aufweist.
